# EUROPEAN PATENT SPECIFICATION

(11) **EP 1 613 472 B1**
(45) Date of publication and mention of the grant of the patent: **26.10.2011**
(21) Application number: 04725580.7
(22) Date of filing: 02.04.2004
(51) Int. Cl.: B32B 27/18, C08K 5/1545

(54) **MATERIAL FOR PACKAGING PURPOSES**
MATERIAL FÜR VERPACKUNGSZWECKE
MATERIAU D'EMBALLAGE

(30) Priority: 02.04.2003 SE 0300960; 02.04.2003 US 320082 P
(43) Date of publication of application: 11.01.2006
(73) Proprietor: Flextrus Group AB, 221 00 Lund (SE)
(72) Inventor: NIDEBORN, Karl, S-227 31 Lund (SE); OLSSON, Karolin, S-230 41 Klågerup (SE)
(74) Representative: VALEA AB
(86) International application number: PCT/SE2004/000516
(87) International publication number: WO 2004/087417

(56) References cited:
- EP-A1- 1 285 744
- EP-A2- 0 705 872
- CH-A5- 691 809
- US-A- 5 234 750
- US-A- 5 863 964
- DATABASE WPI Week 200325, Derwent Publications Ltd., London, GB; Class A92, AN 2003-250850, XP002904391 & JP 2002 240848 A (ITO TADASHI SUNPLUS KK) 28 August 2002

## Description

### TECHNICAL FIELD

The invention relates to material for packaging purposes comprising a first layer which comprises a polymer material, wherein said first layer has a first surface intended to be turned towards a packaging object and a second surface intended to be turned away from the packaging object, and method for preparing a material and method for packaging by use of a material, and packages.

### BACKGROUND ART

When foods and polymer materials, such as packaging material, are exposed to heat, ultra-violet (UV) light, mechanical stress or catalyst residues, free radicals may be generated. This is an initiation step in an auto-oxidation process, which is a degradation process occurring both in foods and polymer systems.

A special problem in the handling of fat foods such as oils, cured meats and the like, is that the shelf-life of such foods are limited by oxidation of lipids in the foods. Lipid oxidation may result in that the foods smell and taste bad, and that they lose in colour and consistency. The rate of oxidation is influenced by a number of factors such as availability of oxygen, temperature, pH, exposure to light, presence of pro- and anti-oxidants and content of humidity. Further one important factor is the degree of unsaturation of fatty acids in the foods where the more highly unsaturated fatty acids will tend to react more easily with free radicals. Thus, foods rich in oleic, linoleic and linolenic acids are particularly susceptible to oxidation. Each type of fatty acid may produce several different hydroperoxides which are the primary product of lipid oxidation. The hydroperoxides have no flavour themselves, but in the presence of catalysts and at elevated temperatures they may decompose in a number of compounds, many of which are volatile. These volatile oxidation products, including alkanes, alkenes, aldehydes, alcohols, ketones and esters, are the ones that give oxidised lipids their distinct smell.

Further, a theory to the origin of the white colour, i.e. discoloration, in cooked cured meat, such as cooked meat, is that it depends partly on the oxidation of hemo-Fe(II)NO₂ and/or hemo(NO)_{X}-Fe(II)(NO)_{X}. Hemo-Fe(II)NO₂ (Frouinet et al., 1976) or hemo(NO)_{X}-Fe(II))(NO)_{X} (Killday et al., 1988) are suggestions of nitrous hemo-products which are produced when cured meats are cooked and the protein nitrous myoglobin is denaturalised and separated from the hemo-group.

In order to avoid oxidation and to prolong the shelf-life of foods, various approaches are suggested. It is, for example, common that food manufacturers try to limit the amount of oxygen available around the packaged food by reducing the oxygen concentration in the food packages. This can be achieved by minimising the volume of head-space in the packages or by packaging products under vacuum or in a modified gas mixture, e.g. by modified atmosphere packaging (MAP).

Another way of maintaining in packed foods is by the use of antioxidants. Antioxidants are compounds which may detain the oxidation process, or slow the rate of oxidation in oxidation of, for example, foods and polymer packages. Antioxidants prevent oxidative degradation by reacting with free radicals or atmospheric oxygen, which otherwise should react with the foods or polymer components in package material. Many foods resist to a certain extent oxidative degradation by their natural content of antioxidants. Further, it is possible to increase the protection against oxidative degradation by adding antioxidants to the foods. Synthetic antioxidants are also added as stabiliser in polymer mixtures to prevent oxidative degradation of package materials.

To prevent degradation of polymers in package materials it has hitherto been common to add butylated hydroxytoluen, BHT, to the material. Thus, BHT has been used in package material too foods such as cheese, biscuits, crisps etc. BHT has also been added to edible animal and vegetable oils and fats to prevent rancidity and as flavour preserver. However, it has been shown that BHT may cause allergic reactions. Use of BHT is normally not allowed in foods intended specifically for babies and other young children.

Thus, an antioxidant which has shown to be suitable is α-tocopherol, which is a vitamin E with high biological activity.

Thus, by addition of α-tocopherol in package materials it is possible to prevent degradation of a polymer package material during production and handling of the material.

α-tocopherol is classified as an approved stabiliser for polymer materials and has harmless break-down products. These break-down products are mainly dimers, trimers and tocoquininoid structures, which are themselves often very effective antioxidants contributing to the total good antioxidative effect of α-tocopherol. To achieve a good resistance to degradation of the package material, ratios of α-tocopherol of up to 500 ppm has been added to the polymer package material.

However, despite packaging in vacuum or by MAP, a remaining problem is that packaged foods in light permeable packages and especially foods which contains lipids and, possibly, denaturalised nitrous myoglobin, relatively rapidly oxidises and loses in flavour as well as appearance. This is especially a problem in foods such as sliced sausage products, bacon, cooked ham, or the like, which at the selling are exposed through the package and where an appealing and appetising look is of greatest importance for the proneness of the consumers to by the product. The problem that packaged foods relatively rapidly oxidises and loses in flavour as well as appearance has also shown to be obvious in packages where essentially the whole foods is in contact with the package. Despite that a limited availability of oxygen is especially manifested in light permeable packages where essentially the whole foods is in contact with the package and where the packaging has been performed in vacuum or by MAP, it is a fact that the problem also remains in such packages especially when they are exposed to light.

### DISCLOSURE OF THE INVENTION

By the present invention there has been achieved a light permeable material of the type mentioned in the introduction. Thus, the material for packaging purposes comprises a first layer, which comprises a polymer material, wherein said first layer has a first surface intended to be turned towards a packaging object. Further, said first layer comprises one or more compounds having the activity of "vitamin E" in a total concentration of at least 700 ppm.

Said first layer comprises a polymer material, which may be sealable or not. If the polymer material is sealable it may, for example, be heat-sealable.

Further, the polymer material may comprise, for example, polyolefin and/or polyester based polymers. Examples of suitable polyolefin or polyester based polymers are polyethylene (PE), polypropylene (PP), amorphous polyethylene terephtalate (APET), polyamide (PA) and polyvinyl chloride (PVC). Said first layer may further comprise additives for peel (e.g. polybutene), components to prevent seams, additives to reduce friction or other additives.

Further, the first surface of said first layer is intended to be turned towards a packaging object. That said first surface is intended to be turned towards a packaging object, means that this surface also is the surface of said material which is turned to the packaging object, or that this 'first surface of the first layer' is the surface of the first layer which is closest to that surface of said material which is turned towards the packaging object. The embodiment that 'the first surface of the first layer' is the surface of the first layer which is closest to that surface of said material which is turned towards the packaging object, comprises materials where a migration layer, e.g. comprising PE, is arranged on 'the first surface of the first layer'.

The material according to the present invention is suitable, especially, in packaging of packaging objects where there is a risk of oxidation of lipids and/or the hemo-products which are formed when nitrous myoglobin is denaturalised. Such packaging objects contain lipids and/or said hemo-products, and comprises foods, e.g. oils, cured meats, such as sliced sausage products, bacon, or cooked ham, pate, offal, wine, beer or fruit juice, or the like.

Said first layer further comprises one or more compounds having the activity of "vitamin E" in a total concentration of at least 700 ppm. Compounds having the activity of "vitamin E" comprise, for example, the eight naturally occurring compounds: d-α-, d-β-, d-γ-, d-δ-tocopherol, and their corresponding tocotrienols. Further, the compounds having the activity of "vitamin E" comprise also, for example, synthetic compounds having the activity of "vitamin E", which synthetic compounds are mixtures of the different possible optical isomers. In compounds having the activity of "vitamin E" are also comprised intermediates having the activity of "vitamin E", which intermediates are formed when said one or more compounds having the activity of "vitamin E" in the first layer is/are oxidised.

There are eight naturally occurring such compounds: d-α-, d-β-, d-γ-,and d-δ-tocopherol, and their corresponding tocotrienols. Tocopherols are saturated compounds and much more common than the unsaturated tocotrienols. The structures differ from one another by the number and locations of methyl groups in the ring structures of the compounds. Tocopherols have three chiral carbons (2, 4' and 8') and the natural materials have RRR configuration, while synthetic vitamin E is a mixture of equal amounts of all eight possible optical isomers of α-tocopherol and is referred to as dl-α-tocopherol.

In their pure form the compounds having the activity of "vitamin E" are a yellow viscous liquid which easily decomposes in the presence of light, oxygen, alkaline pH, or in the presence of traces of metal ions. The term vitamin E is a generic term for all compounds which possess vitamin E activity.

The biologically most active form of vitamin E is α-tocopherol according to formula (1)

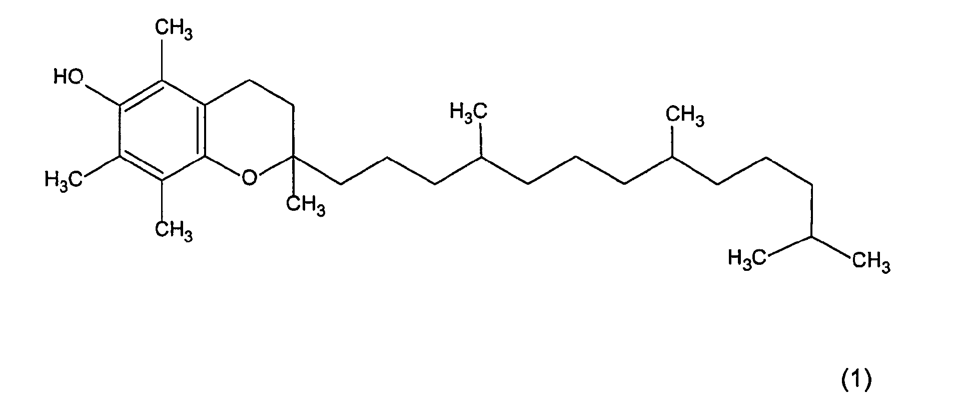

By α-tocopherol according to formula (1) is here meant compounds selected from dl-α-tocopherol (CAS Reg No 10191-41-0), d-α-tocopherol (CAS Reg No 59-02-9) and all further possible stereoisomers of α-tocopherol.

dl-α-tocopherol is prepared synthetically and is a mixture of eight different optical isomers of α-tocopherol.

d-α-tocopherol is a fat-soluble, naturally occurring antioxidant, which is present in foods of both vegetable and animal origin, although it is only synthesised by plants. Further, vegetable oils and products of such oils, e.g. margarine, are the richest sources of vitamin E. Other sources with lower amounts of vitamin E are nuts (such as almonds, hazelnuts and peanuts), cereals, fruits, vegetables, meat and fish.

Intermediates having the activity of "vitamin E" are harmless degradation products, and are, essentially, dimers, trimers and tocoquininoid structures, which by themselves often are very effective antioxidants contributing to the total good antioxidative effect of said one or more compounds having the activity of "vitamin E".

Said one or more compounds having the activity of "vitamin E" may be applied to said first layer by any suitable method, e.g. by mixing in extrusion, alternatively spraying or lacquering. In spraying or lacquering of said first surface, which is turned towards the packaging object, with suitable dispersion or lacquer containing said one or more compounds having the activity of "vitamin E", there is achieved a high concentration of said one or more compounds having the activity of "vitamin E" on the surface which has the ability to get in contact with the packaging object. In the mixing in extrusion, the compounds having the activity of vitamin E are mixed in said first layer which is closest to the packaging object.

The material according to the present invention provides increased shelf-life to a packaging object, e.g. a lipid containing food, which is packed in the material.

Further the material according to the present invention has unexpectedly been shown to have a especially good effect on shelf-life to packaging objects in packages where essentially the whole packaging object is in contact with the package and where the package has been achieved under vacuum or by MAP. When such packages, where it, as described earlier, certainly is a limited access of oxygen, are exposed to light, the light penetrates through the package and oxygen radicals are formed through the cooperation of light with present oxygen. The oxygen which is present originates from oxygen that has diffused in or from oxygen which was dissolved in the packaging object. When the whole packaging object is in contact with the package, the packaging object is the most likely place where the formed oxygen radicals are terminated with discoloration and decreased shelf-life as a result. By using, in packages where essentially the whole packaging object is in contact with the package, and where the package has been achieved under vacuum or by MAP, a material according to present invention where a first layer, which is in contact with the packaging object, comprises a total concentration of at least 700 ppm of one or more compounds having the activity of "vitamin E", it has been shown that the shelf-life of the packed packaging objects considerably has improved. Said one ore more compounds having the activity of "vitamin E" in a total concentration of at least 700 ppm probably act as oxygen radical scavengers, and immediately take care of the free oxygen radicals.

The good effects of the material according to the present invention, which are described, are unexpected because α-tocopherol, i.e. the compounds having the activity of "vitamin E", has earlier been used in package material only in rather low concentrations, about 100 ppm and not more than 500 ppm, and for another purpose, namely to protect the package material against degradation, and, also, because there has been a common opinion that high concentrations of antioxidants, such as α-tocopherol in said earlier use, considerably deteriorate properties, such as looks and strength, in the package material.

The material according to the present invention with a higher concentration, than earlier has been described, of compounds having the activity of "vitamin E" in a material for packaging purposes, thus provides a material which unexpectedly combines the above described good effects with the maintained good properties in relation to looks and strength of the material.

A further embodiment according to the present invention relates to a material, wherein said total concentration is at least 800 ppm, 900 ppm, 1000 ppm, 2000 ppm, 3000 ppm or 4000 ppm.

In an even further embodiment according to the present invention a material is concerned wherein said total concentration is at least 5000 ppm.

By the present invention it has further been shown possible, without considerable deterioration of the package properties, to add extremely high concentrations of the compounds having the activity of "vitamin E" to a material for packaging purposes. Thus, it has been shown to be possible to prepare a material for packaging purposes with the compounds having the activity of "vitamin E" in concentrations of about 10000 ppm without having the expected negative effects to the material. 10000 ppm is, however, not an upper limit for the content of the compounds having the activity of "vitamin E" in a material according to the invention, thus, even higher concentrations are useful within the scope of the invention.

In a further embodiment according to the invention said material is concerned, wherein said one or more compounds having the activity of "vitamin E" is/are α-tocopherol according to formula (1).

In further embodiments according to the present invention materials are concerned, wherein said polymer material, which may be sealable or not, comprises polyolefin and/or polyester based polymers, for example, polyethylene (PE), polypropylene (PP) and/or amorphous polyethylene terephtalate (APET).

The material according to the invention is in the form of a laminate. The material comprises a second layer which is a strenthenig layer and/or a third layer which exhibits heat resistance.

The material according to the invention may comprise a second layer which is a strengthening layer. Said second layer, which may, e.g., comprise polyester, may be arranged at the second surface of said first layer, wherein said second layer works to prevent that said one or more compounds having the activity of "vitamin E" is released to the environment of the package when the material is used in packaging. When said second layer comprises polyester it is preferably an oriented polyethylene terephtalate (OPET). Further, said second layer may comprise other polymer materials, such as for example oriented polyamide (OPA).

A material according to the invention, for example in the form of a laminate, may comprise two or more layers having different properties fulfilling different functions. Thus, it is preferred that said second layer is included, which is a strengthening layer and gives strength to the material. Said second layer may, for example, comprise oriented polyethylene terephtalate (OPET) or oriented polyamide (OPA).

Further, the material, for example in the form of a laminate, may comprise a third layer which exhibits heat resistance, which third layer may, for example, comprise OPET or OPA. Said second layer and said third layer may both comprise OPET, OPA, oriented polypropylene (OPP), amorphous polyethylene terephtalate (APET), polyvinyl chloride (PVC), polycarbonate (PC) or another layer which gives strength and heat resistance or only heat resistance.

Said third layer which exhibits heat resistance may further be achieved by using a method such as cross linking, e.g. cross linking of a polyolefin, or by use of high temperature melting polymers, e.g. EVOH or polycarbonate or protective lacquers.

Further, the material according to the invention may, besides said first layer, comprise further layer/s comprising said polymer materials, i.e. similar to said first layer but without said one or more compounds with the activity of "vitamin E".

A further embodiment according to the present invention relates to said material, wherein said polymer material is sealable.

An even further embodiment according to the present invention relates to said material, wherein said polymer material is not sealable.

A material according to the invention may further comprise a material combination which gives a barrier and heat resistance, wherein the material combination may comprise a barrier layer, and comprises for example, copolymer of ethylene and vinyl alcohol (EVOH), polyvinyl alcohol (PVOH), polyvinyl dichloride (PVDC) or vacuum deposited barrier layers.

Said barrier layer may be arranged between said first layer and said second layer or between said first layer and said third layer. Further, said barrier layer may be placed in any suitable location in the material according to the invention.

Further, a material according to the invention may, at the same time, comprise any further "second layer", "third layer" and/or "barrier layer'.

The different layers which are included in the material may be bonded together by a means for adhesion, an adhesion primer and/or a primer, which may, for example, be used for achieving adherence between said first layer and said barrier layer or between any other suitable layers in the material according to the invention. Means for adhesion may, for example, be a maleic acid anhydrid modified polyethylene.

The same layer may, of course, fulfil more than one function. The total thickness of the material may be different depending on the proposed area for use, and on which properties the material shall have, and may vary between 12µm and 400µm, or between 30µm and 120µm.

Further, the present invention relates to a method for preparing a material which is described herein, wherein said method comprises formation of said first layer, which comprises said one or more compounds having the activity of "vitamin E", by conventional technique, comprising, for example, extrusion, lamination, spraying or lacquering, and formation of said material, which comprises further layer and/or barrier layer, by using conventional technique, comprising, for example, extrusion, lamination, e.g. lacquer lamination or extrusion lamination.

An even further embodiment relates to a material according to the present invention, wherein said material is for packaging of liquid packaging objects, for example, beer, wine or fruit juice. When a packaging object, for example, is beer, wine or fruit juice, the material according to the present invention may, e.g., comprise polyester based polymers, for example APET.

The material according to the present invention may, for example, be comprised in encompassing containers, e.g. containers of polyethylene terephtalate, for example, so called PET bottles.

The present invention also relates to a method for packaging, wherein a material which has been described herein is used for said method.

Further, said method for packaging with said material may comprise, for example, thermo forming, heat sealing towards a compatible material, e.g., a package through, welding and/or the like.

The present invention also relates to a package, wherein a material which has been described herein is comprised in said package.

Examples of the material according to the invention are:
OPET/PE/means for adhesion/EVOH/means for adhesion/[PE with a total concentration, such as earlier described, of one or more compounds having the activity of "vitamin E"].
OPA/PE/means for adhesion/EVOH/means for adhesion/[PE with a total concentration, such as described earlier, of one or more compounds having the activity of "vitamin E"].
OPP/PE/means for adhesion/EVOH/means for adhesion/[PE with a total concentration, such as described earlier, of one or more compounds having the activity of "vitamin E"].
PE /EVOH /[PE with a total concentration, such as described earlier, of one or more compounds having the activity of "vitamin E"].
(OPET with vacuum deposited barrier)/[APET with a total concentration, such as described earlier, of one or more compounds having the activity of "vitamin E"].
APET/[PE with a total concentration, such as described earlier, of one or more compounds having the activity of "vitamin E"].
APET with a total concentration, such as described earlier, of one or more compounds having the activity of "vitamin E".
APET/[EVOH with a total concentration, such as described earlier, of one or more compounds having the activity of "vitamin E"].
PA/[APET with a total concentration, such as described earlier, of one or more compounds having the activity of "vitamin E"].
APET/(oxygen scavenger)/[APET with a total concentration, such as described earlier, of one or more compounds having the activity of "vitamin E"].
PVC/[PE with a total concentration, such as described earlier, of one or more compounds having the activity of "vitamin E"].

The present invention is essentially founded on that compounds having the activity of "vitamin E" have been concentrated to the first surface of the first layer in the material, i.e. the surface of the first layer which is closest to the packaging object. At said surface the compounds having the activity of "vitamin E" take care of, i.e. terminate, the oxygen radicals which are formed when oxygen which is situated between the material and the packaging object is exposed to light.

The following described examples of embodiments do only illustrate the invention and are by no means intended to limit the invention.

### EXAMPLES OF EMBODIMENTS

### Example 1

**Preparation by extrusion of material for packaging purpose, comprising a first layer of polyethylene (PE) comprising dl-α-tocopherol, wherein a mixing concentration of 10000 ppm dl-α-tocopherol has been used, a barrier layer of copolymer of ethylene and vinyl alcohol (EVOH), a further layer of PE and a second layer which is a strengthening layer.**

A material comprising: a first layer of PE (26 g/m²) comprising dl-α-tocopherol, wherein a mixing concentration of 10000 ppm dl-α-tocopherol has been used, a layer with means for adhesion, (5 g/m²), a barrier layer of EVOH (2.5 g/m²), a further layer with means for adhesion (5 g/m²), a further layer of PE (17 g/m²), and a second layer which is an oriented film working as a strengthening layer. The material was prepared through extrusion.

### Example 1a

### The second layer is of oriented polyethylene terephtalate (OPET)

OPET/PE/means for adhesion/EVOH/means for adhesion/PE+α-tocopherol was prepared according to example 1, wherein the second layer of OPET has a thickness of 12µm and is prepared externally. The material according to example 1a was prepared with conventional methods which are obvious to persons skilled in the art.

### Example 1b

### The second layer is of oriented polyamide (OPA)

OPA/PE/means for adhesion/EVOH/means for adhesion/PE+α-tocopherol was prepared according to example 1, wherein the second layer of OPA has a thickness of 12µm and is prepared externally. The material according to example 1 b was prepared with conventional methods obvious to a person skilled in the art.

### Example 1c

### The second layer is of oriented polypropylene (OPP)

OPP/PE/means for adhesion/EVOH/means for adhesion/PE+α-tocopherol was prepared according to example 1, wherein the second layer of OPP has a thickness of 20 µm and is prepared externally. The material according to example 1c was prepared with conventional methods which are obvious to persons skilled in the art.

### Example 2

**Test in a refrigerator of the shelf-life of a packaging object in packages which are exposed to light where essentially the whole packaging, object is in contact with the package and where the packaging has been performed by MAP.**

Packages comprising material according to example 1a, and a reference material without any compounds having the activity of "vitamin E", were prepared, where essentially the whole packaging object, here sliced sausage, is in contact with the package. Further the packaging has been performed by MAP.

The packaging object in each package were exposed in a refrigerator at 6°C to a constant light from a lamp of 20 W at a distance of 20 cm through the material according to example 1a and through the reference material, respectively. That is a lamp of 20 W above each package (package of sausage).

In the package comprising a reference material without any compounds having the activity of "vitamin E", the sliced sausage was discoloured after 30 hours. The discoloration may be described as a change in colour from a fresh pink-apricot colour to a grey-beige colour.

In the package comprising the material according to example 1a, the sliced sausage was not yet discoloured after 33 days. Since the shelf-life to the sliced sausage is 21 days there was no reason for continuing the test.

### Example 3

**Test in a light-box of the shelf-life of packaging objects in packages which are exposed to light where essentially the whole packaging object is in contact with the package and where the packaging has been performed by MAP.**

### Example 3a

### The package is a rather flat package

Packages comprising material according to example 1a, and a reference material without any compound having the activity of "vitamin E", were prepared, where essentially the whole packaging object, here sliced sausage ('Shinkenfleischwurst' which looks like cooked German sausage), is in contact with the package. Further, the slices of sausages are placed in a ring in a rather flat package and the packaging has been performed by MAP.

The packaging object in each package were exposed to light in a light-box at 7°C and 75-80% relative humidity to a constant light from a lamp of 22 W at a distance of about 25 cm and through the material according to example 1a and the reference material, respectively. The light-box is painted white on the inside to achieve maximum reflection and is arranged with a 22W lamp.

The test was stopped after 40 hours and the light-box was opened, wherein the packaging objects, the sliced sausages, in the packages were compared. The sliced sausage in the package comprising the material according to example 1 a had a much better colour than the sliced sausage in the package comprising the reference material.

### Example 3b

### The package is 5-10 cm deep package

Packages comprising the material according to example 1a, and a reference material without any compound having the activity of "vitamin E", were prepared, wherein essentially the whole packaging object, here two piles of sliced sausage. The top slice of sausage in the two piles is in contact with the material according to example 1a and the reference material, respectively. Further, the packages has a deep of about 5-10 cm. In this type of package, the packaging has been performed by MAP and the top slice of sausage risks to be discoloured when the package is exposed to light at storing.

The packaging object in each package were exposed to light in a light-box at 7°C and 75-80% relative humidity to a constant light from a lamp of 22 W at a distance of about 25 cm and through the material according to example 1a and the reference material, respectively. The light-box is painted white on the inside to achieve maximum reflection and is arranged with a 22 W lamp.

The test was stopped after 40 hours and the light-box was opened, wherein the packaging objects, the sliced sausage and especially the top slices of sausage, in the packages were compared. The top slices of sausage in the package comprising the material according to example 1a had a much better colour than the top slices of sausage in the package comprising the reference material.

## Claims

1. A light permeable material for packaging purposes comprising a first layer which comprises a polymer material, wherein said first layer has a first surface intended to be turned towards a packaging object, **characterized in that** said first layer comprises one or more compounds having the activity of "vitamin E" in a total concentration of at least 700 ppm, and **in that** the material comprises a second lager whith is a strengthering lager and/or a third lager which exhibits heat resistance.

2. A material according to claim 1, wherein said total concentration is at least 5000 ppm.

3. A material according to claim 1 or 2, wherein said total concentration is at least 10000 ppm.

4. A material according to any of the preceding claims, wherein said one or more compounds having the activity of "vitamin E" is α-tocopherol according to formula (1), 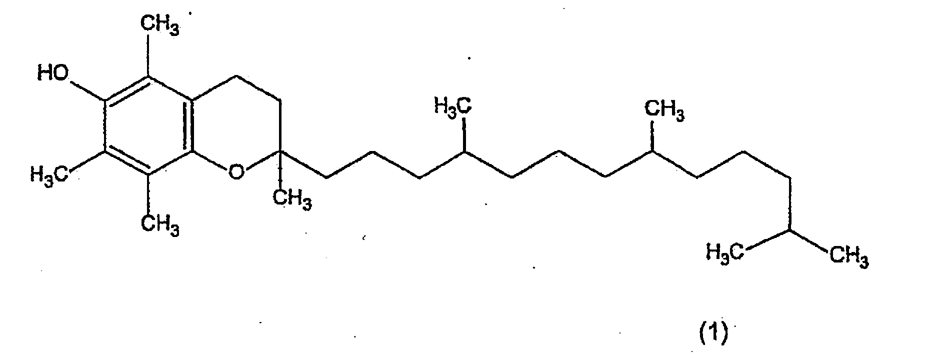 wherein by α-tocopherol according to formula (1) it is meant compounds selected from dl-α-tocopherol, d-α-tocopherol and all other stereoisomers of α-tocopherol.

5. A material according to any of the preceding claims, wherein the material comprises a material combination which gives a barrier and heat resistance, and the material combination may comprise a barrier layer.

6. A material, according to any of the preceding claims, wherein the material comprises further layer/s comprising said polymer material.

7. A material according to any of the preceding claims, wherein said polymer material comprises polyolefin and/or polyester based polymers, for example, polyethylene (PE), polypropylene (PP), amorphous polyethylene terephtalate (APET), polyvinyl chloride (PVC), polycarbonate (PC) and/or other layer, which gives strength and heat resistance or only heat resistance.

8. A material according to any of claims 1-7, wherein said second layer and/or said third layer, independently of eac other, oriented polyethylene terephtalate comprise (OPET), oriented polyamide (OPA), oriented polypropylene (OPP), amorphous polyethylene terephtalate (APET) or polyvinyl chloride (PVC).

9. A material according to any of claims 1-8, wherein said third layer has been formed by using methods such as crosslinking or by use of high temperature melting polymers or protective lacquers.

10. A material according to any of claims 1-9, wherein said barrier layer comprises copolymer of ethylene and vinyl alcohol (EVOH), polyvinyl alcohol (PVOH), polyvinyl dichloride (PVDC) or vacuum deposited barrier layer.

11. A material according to any of the preceding claims, wherein any layer/s and/or barrier layer/s are bonded together by use of a means for adhesion.

12. A material according to any of the preceding claims, wherein the total thickness of the material varies between 12 µm and 400 µm.

13. A material according to any of the preceding claims, wherein said polymer material is sealable.

14. Use of a material according to any of the claims 1-12 for packaging of liquid packaging objects, for example, beer, wine or fruit juice.

15. A method for preparing a material according to any of the preceding claims, wherein said method comprises formation of said first layer and formation of said material comprising further layer/s and/or barrier layer/s

16. A method for packaging, wherein a material according to any of claims 1-14 is used in said method.

17. Package, wherein a material according to any of claims 1-14 is comprised in said package.

## Patentansprüche

1. Lichtdurchlässiges Material für Verpackungszwecke, welches eine erste Schicht enthält, welche ein Polymermaterial enthält, wobei die erste Schicht eine erste Fläche hat, welcher zugedacht ist, einem Verpackungsobjekt zugewendet zu werden, **dadurch gekennzeichnet, dass** die erste Schicht einen oder mehrere Verbundstoffe enthält, welches bzw. welche die Wirksamkeit von "Vitamin E" in einer Gesamtkonzentration von 700 ppm hat bzw. haben, und dass das Material eine zweite Schicht, welche eine Verstärkungsschicht ist, und/oder eine dritte Schicht, welche eine Wärmebeständigkeit besitzt, enthält.

2. Material nach Anspruch 1, bei welchem die Gesamtkonzentration zumindest 5000 ppm beträgt.

3. Material nach Anspruch 1 oder 2, bei welchem die Gesamtkonzentration zumindest 10000 ppm beträgt.

4. Material nach einem der vorhergehenden Ansprüche, bei welchem das eine oder die mehreren Verbundstoffe, welche die Wirksamkeit von "Vitamin E" haben, ein a-Tocopherol gemäss der Formel (1) ist: 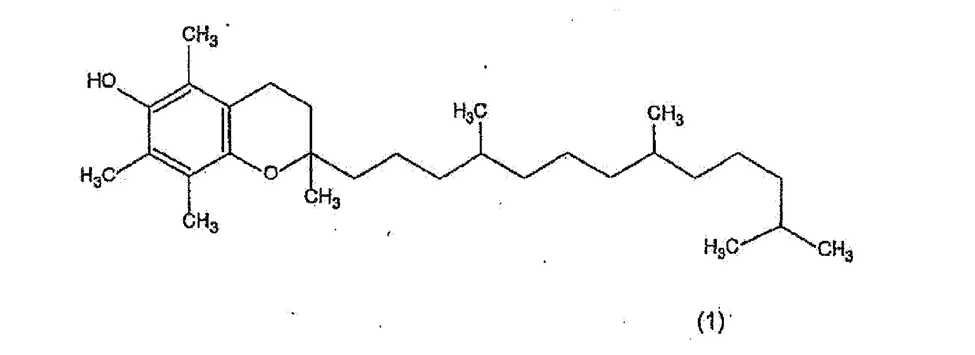 wobei mit a-Tocopherol gemäss der Formel (1) jene Verbundstoffe gemeint sind, welche aus dl-a-Tocopherol, d-a-Tocopherol und allen weiteren Stereoisomeren aus a-Tocopherol ausgewählt sind.

5. Material nach einem der vorhergehenden Ansprüche, wobei das Material eine Materialkombination enthält, welche eine Barriere und eine Wärmebeständigkeit ergibt, und wobei die Materialkombination eine Barriereschicht enthalten kann.

6. Material nach einem der vorhergehenden Ansprüche, wobei das Material ferner eine Schicht bzw. Schichten enthält, welche ein Polymermaterial bzw. Polymermaterialien enthält bzw. enthalten.

7. Material nach einem der vorhergehenden Ansprüche, bei welchem das Polymermaterial Polyolefin- und/oder Polyester-basierende Polymere, beispielsweise Polyethylen (PE), Polypropylen (PP), amorphes Polyethylen-Terephtalat (APET), Polyvinylchlorid (PVC), Polykarbonat (PC) und/oder weitere Schichten, enthält, welches eine Festigkeit und Wärmebeständigkeit oder lediglich eine Wärmebeständigkeit gibt.

8. Material nach einem der Ansprüche 1 bis 7, bei welchem die zweite Schicht und/oder die dritte Schicht, unabhängig voneinander, ausgerichtetes Polyethylen-Terephtalat (OPET), ausgerichtetes Polyamid (OPA), ausgerichtetes Polypropylen (OPP), amorphes Polyethylen-Terephtalat (APET) oder Polyvinylchlorid (PVC) enthält bzw. enthalten.

9. Material nach einem der Ansprüche 1 bis 8, bei welchem die dritte Schicht unter Verwendung von Verfahren, wie beispielsweise eine Vernetzung, oder durch Verwendung von Polymeren mit hohem Schmelztemperaturpunkt oder Schutzlacken ausgebildet ist.

10. Material nach einem der Ansprüche 1 bis 9, bei welchem die Barriereschicht ein Copolymer aus Ethylen und Vinylalkohol (EVOH), Polyvinylalkohol (PVOH), Polyvinyldichlorid (PVDC) oder eine unter Vakuum aufgetragene Barriereschicht enthält.

11. Material nach einem der vorhergehenden Ansprüche, bei welchem jegliche Schicht bzw. Schichten und/oder Barriereschicht bzw. Barriereschichten mittels eines Klebemittels miteinander verbunden sind.

12. Material nach einem der vorhergehenden Ansprüche, bei welchem die Gesamtdicke des Materials in einem Bereich zwischen 12 µm und 400 µm liegt.

13. Material nach einem der vorhergehenden Ansprüche, bei welchem das Polymermaterial versiegelbar ist.

14. Verwendung eines Materials nach einem der Ansprüche 1 bis 12 zum Verpacken von Flüssigkeiten, beispielsweise Bier, Wein oder Fruchtsaft.

15. Verfahren zum Vorbereiten eines Materials nach einem der vorhergehenden Ansprüche, wobei das Verfahren ein Ausbilden von der ersten Schicht und ein Ausbilden von dem Material, welches eine weitere Schicht bzw. Schichten und/oder Barriereschicht bzw. Barriereschichten enthält.

16. Verpackungsverfahren, wobei ein Material nach einem der Ansprüche 1 bis 14 bei dem Verfahren verwendet wird.

17. Verpackung, wobei ein Material nach einem der Ansprüche 1 bis 14 in der Verpackung enthalten ist.

## Revendications

1. Matériau perméable à la lumière destiné à des fins de conditionnement comprenant une première couche comprenant un matériau polymère, dans lequel ladite première couche a une première surface censée être tournée vers un objet de conditionnement, **caractérisé en ce que** ladite première couche comprend un ou plusieurs composés ayant l'activité de la "vitamine E" en une concentration totale d'au moins 700 ppm, et **en ce que** le matériau comprend une deuxième couche qui est une couche de renforcement et/ou une troisième couche qui présente une résistance à la chaleur.

2. Matériau selon la revendication 1, dans lequel ladite concentration totale est d'au moins 5 000 ppm.

3. Matériau selon la revendication 1 ou 2, dans lequel ladite concentration totale est d'au moins 10 000 ppm.

4. Matériau selon l'une quelconque des revendications précédentes, dans lequel ledit ou lesdits composés ayant l'activité de la "vitamine E" est l'α-tocophérol selon la formule (1), 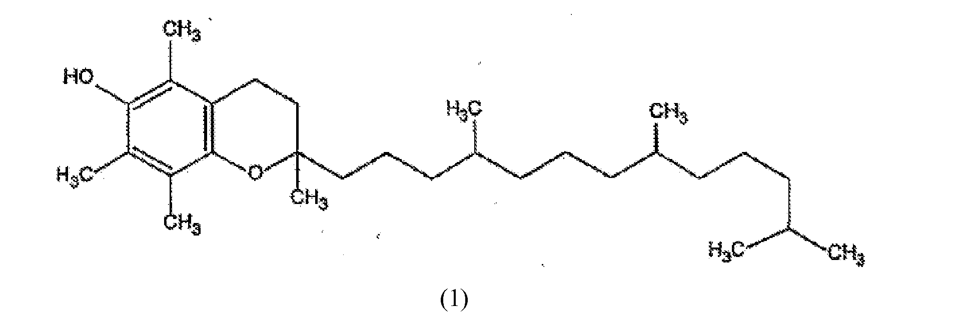 dans lequel, par α-tocophérol selon la formule (1), l'on doit comprendre des composés choisis parmi le dl-α-tocophérol, le d-α-tocophérol et tous les autres stéréoisomères du α-tocophérol.

5. Matériau selon l'une quelconque des revendications précédentes, dans lequel le matériau comprend une combinaison de matériaux donnant des propriétés de barrière et de résistance thermique, et la combinaison de matériaux pouvant comprendre une couche barrière.

6. Matériau selon l'une quelconque des revendications précédentes, dans lequel le matériau comprend une autre couche ou d'autres couches comprenant ledit matériau polymère.

7. Matériau selon l'une quelconque des revendications précédentes, dans lequel ledit matériau polymère comprend des polymères à base de polyoléfines et/ou de polyesters, par exemple, du polyéthylène (PE), du polypropylène (PP), du polyéthylène téréphtalate amorphe (APET), du polychlorure de vinyle (PVC), du polycarbonate (PC) et/ou une autre couche, qui donnent des propriétés de résistance mécanique et de résistance thermique ou de résistance thermique uniquement.

8. Matériau selon l'une quelconque des revendications 1 à 7, dans lequel ladite deuxième couche et/ou ladite troisième couche, indépendamment l'une de l'autre, comprennent du polyéthylène téréphtalate orienté (OPET), du polyamide orienté (OPA), du polypropylène orienté (OPP), du polyéthylène téréphtalate amorphe (APET) ou du polychlorure de vinyle (PVC).

9. Matériau selon l'une quelconque des revendications 1 à 8, dans lequel ladite troisième couche a été formée en utilisant des procédés tels que la réticulation ou par le biais de l'utilisation de polymères fondant à des températures élevées ou des vernis de protection.

10. Matériau selon l'une quelconque des revendications 1 à 9, dans lequel ladite couche barrière comprend des copolymères de l'éthylène et de l'alcool vinylique (EVOH), un poly(alcool vinylique) (PVOH), un polydichlorure de vinyle (PVDC) ou une couche barrière déposée sous vide.

11. Matériau selon l'une quelconque des revendications précédentes, dans lequel une couche quelconque ou des couches quelconques et/ou une couche barrière ou des couches barrières sont liées ensemble en utilisant un moyen d'adhésion.

12. Matériau selon l'une quelconque des revendications précédentes, dans lequel l'épaisseur totale du matériau varie entre 12 µm et 400 µm.

13. Matériau selon l'une quelconque des revendications précédentes, dans lequel ledit matériau polymère peut être scellé.

14. Utilisation d'un matériau selon l'une quelconque des revendications 1 à 12, pour conditionner des objets liquides à conditionner, par exemple, de la bière, du vin, ou du jus de fruit.

15. Procédé de préparation d'un matériau selon l'une quelconque des revendications précédentes, ledit procédé comprenant la formation de ladite première couche et la formation dudit matériau comprenant la ou les autres couches et/ou la ou les couches barrières.

16. Procédé de conditionnement, dans lequel un matériau selon l'une quelconque des revendications 1 à 14 est utilisé dans ledit procédé.

17. Conditionnement, dans lequel un matériau selon l'une quelconque des revendications 1 à 14 est compris dans ledit conditionnement.
